# FASCICULE DE BREVET EUROPEEN

(11) **EP 0 383 669 B1**
(45) Date de publication et mention de la délivrance du brevet: **31.03.1993**
(21) Numéro de dépôt: 90400380.3
(22) Date de dépôt: 13.02.1990
(51) Int. Cl.: B60G 21/05, B60G 9/00

(54) **Dispositif stabilisateur, véhicule automobile équipé d'un tel dispositif et ensemble pour le montage de ce dispositif sur un tel véhicule**
Stabilisatoreinrichtung, mit dieser ausgerüstetes Kraftfahrzeug und Teilesatz zum Einbau derselben in ein solches Fahrzeug
Stabilising device, motor vehicle equipped with this device and assembly for mounting this device on such a vehicle

(30) Priorité: 13.02.1989 FR 8901811
(43) Date de publication de la demande: 22.08.1990
(73) Titulaire: BERTIN & CIE, F-78373 Plaisir Cédex (FR)
(72) Inventeur: de Goncourt, Louis, Voisins Le Bretonneux, F-78190 Trappes (FR)
(74) Mandataire: Colas, Jean-Pierre

(56) Documents cités:
- FR-A- 507 270
- FR-A- 692 726
- FR-A- 780 867
- FR-A- 2 516 455

## Description

La présente invention est relative à un dispositif stabilisateur pour véhicule automobile et, plus particulièrement, à un tel dispositif conçu pour équiper l'essieu arrière d'un véhicule du type auto-caravane (couramment appelé "camping-car" suivant le nom anglais d'un tel véhicule) ainsi que l'ensemble du type "kit" pour le montage dudit dispositif.

Un camping-car est couramment construit par des carrossiers à partir d'un châssis de camionnette, le plus souvent du type traction avant, avec donc un essieu arrière rigide sans pont, monté sur des amortisseurs à ressort longitudinaux constituant la suspension de la caisse du véhicule. Celle-ci constitue une charge qui présente des caractéristiques différentes de celles de la charge d'une camionnette de transport classique, où l'essentiel de cette charge se trouve en appui sur le plancher de la caisse, avec donc un centre de gravité assez bas par rapport au sol. Dans un camping-car, la caisse est haute de manière à permettre à des personnes d'y demeurer debout. En outre les parties hautes sont alourdies de meubles et autres aménagements suspendus alors que le plancher est largement dégagé pour permettre la circulation des personnes. Il en résulte que le centre de gravité de la caisse et de sa charge est placé nettement plus haut que dans la camionnette pour laquelle le châssis utilisé a été conçu.

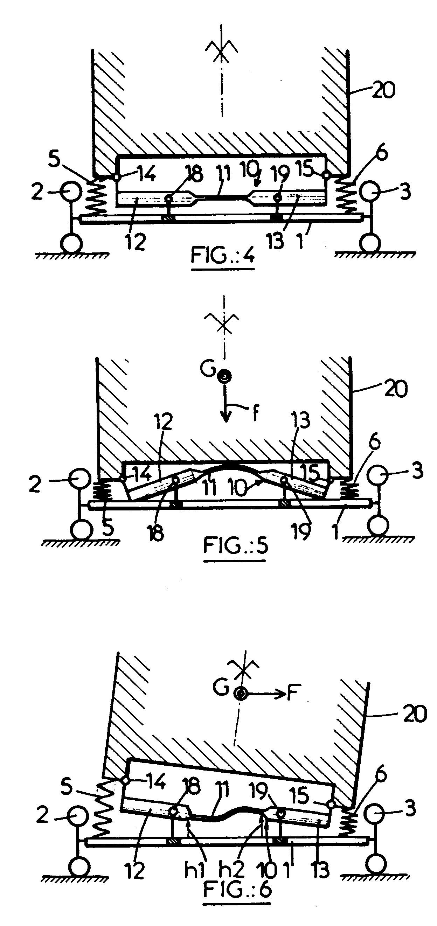

Dans les virages, sur les routes à fort dévers ou en cas de vent latéral, la position haute de ce centre de gravité a pour effet d'accroître le moment de renversement dû aux forces transversales appliquées au véhicule (voir le moment par rapport au sol de l'effort résultant F appliqué au centre de gravité G, sur le schéma d'un véhicule équipé d'un dispositif suivant la présente invention, représenté à la figure 6 du dessin annexé).

Ce moment de renversement agit de manière dissymétrique sur la suspension de l'essieu arrière du véhicule et la caisse prend alors une inclinaison latérale qui peut être forte et désagréable pour les passagers, voire dangereuse. Dans une succession de virages la caisse prend un mouvement de roulis qu'il faut minimiser à la fois pour des raisons de confort et de sécurité.

En outre, la charge moyenne d'un camping-car est plus importante, mais aussi plus constante, que celle d'une camionnette de transport.

Lorsqu'on construit un camping-car à partir d'un châssis de camionnette, on observe alors une surcharge permanente de la suspension de l'essieu arrière, surcharge qu'il faut aussi corriger.

En effet, dans un tel camping-car, la surcharge de l'essieu combinée à la position du centre de gravité, à l'inertie de la caisse et à la grande prise au vent latéral de cette caisse, induisent des angles de braquage qui perturbent notablement la trajectoire du véhicule et obligent le conducteur à de constantes corrections de cette trajectoire.

Une solution consiste à assurer un rappel en roulis de la caisse à l'aide d'une barre classique dite "antidévers" ou "antiroulis", et à recaler la suspension avec des ressorts à faible raideur.

Cette solution, complexe, présente des inconvénients qui découlent de l'encombrement des organes à installer : barre antidévers, attaches de la barre, ressorts additionnels, et du poids de ceux-ci, qui s'ajoute à la masse non suspendue.

On connaît aussi du document FR-A-692 726 un dispositif de stabilisation de véhicule comprenant deux leviers à deux bras transversaux par rapport au châssis du véhicule, leviers dont les extrémités intérieures sont accouplées entre elles et dont les extrémités extérieures sont reliées au châssis. Les leviers sont constitués par des ressorts à lame de poids forcément élevés.

La présente invention a pour but de réaliser un dispositif stabilisateur qui ne présente pas les inconvénients des dispositifs de la technique antérieure et qui, notamment, permet d'intégrer sous un faible volume et avec un faible poids des fonctions de rappel en roulis et de recalage de la suspension du véhicule, sans modification de la suspension d'origine.

On atteint ce but de l'invention, ainsi que d'autres qui apparaîtront dans la suite de la présente description, avec un dispositif stabilisateur en combinaison avec une caisse de véhicule comportant un essieu relié à la caisse par des moyens élastiques de suspension, ce dispositif comprenant un moyen de lame monté parallèlement à l'essieu, et en dessous de la caisse, chacune des deux parties terminales de ce moyen de lame étant articulé d'une part sur la caisse au niveau de l'extrémité de cette partie terminale grâce à un organe de liaison et, d'autre part, sur l'essieu par un point d'articulation situé en avant du raccordement de la partie terminale à une partie centrale du moyen de lame, de manière à constituer un levier pour assurer un rappel en roulis de cette caisse par un contre-basculement de l'autre partie terminale du moyen de lame. Suivant l'invention, le moyen de lame est monté au-dessus de l'essieu et formé d'une seule lame constituée en matériau composite à fibres longitudinales continues de bout en bout, la partie centrale de la lame étant élastiquement plus déformable dans un plan de symétrie commun à la lame et à l'essieu que les deux parties terminales, les deux parties terminales ayant une rigidité constante, chaque partie terminale de rigidité constante constituant un levier qui bascule dans un plan de symétrie commun à la lame et à l'essieu.

La lame constituée de fibres continues présente une section transversale de surface constante et de géométrie variable, la partie centrale souple étant amincie et élargie par rapport aux parties terminales rigides, le plan de la partie amincie étant perpendiculaire au plan de symétrie commun à la lame et à l'essieu.

Suivant un mode de réalisation préféré de l'invention, chaque partie terminale de la lame se prolonge en porte-à-faux à partir du point d'articulation adjacent sur une longueur environ égale à la moitié de celle de la partie centrale souple mesurée antre les deux points d'articulation.

En l'absence de charge, la lame est cintrée suivant son axe longitudinal de manière à être précontrainte sous charge pour délester partiellement les moyens élastiques de suspension.

Au dessin annexé, donné seulement à titre d'exemple :
- la figure 1 est une vue perspective d'un essieu arrière d'un véhicule automobile, du type "auto-caravane", équipé du dispositif stabilisateur suivant l'invention ,
- la figure 2 est une vue en plan d'une lame en matériau composite formant partie du dispositif représenté sur la figure 1, quand cette lame n'est pas chargée,
- la figure 3 est une vue de profil de la lame de la figure 2, et
- les figures 4, 5 et 6 sont des schémas d'un essieu de véhicule équipé du dispositif suivant l'invention, expliquant le fonctionnement de ce dispositif, au repos, sous charge verticale et sous effort de renversement, respectivement.

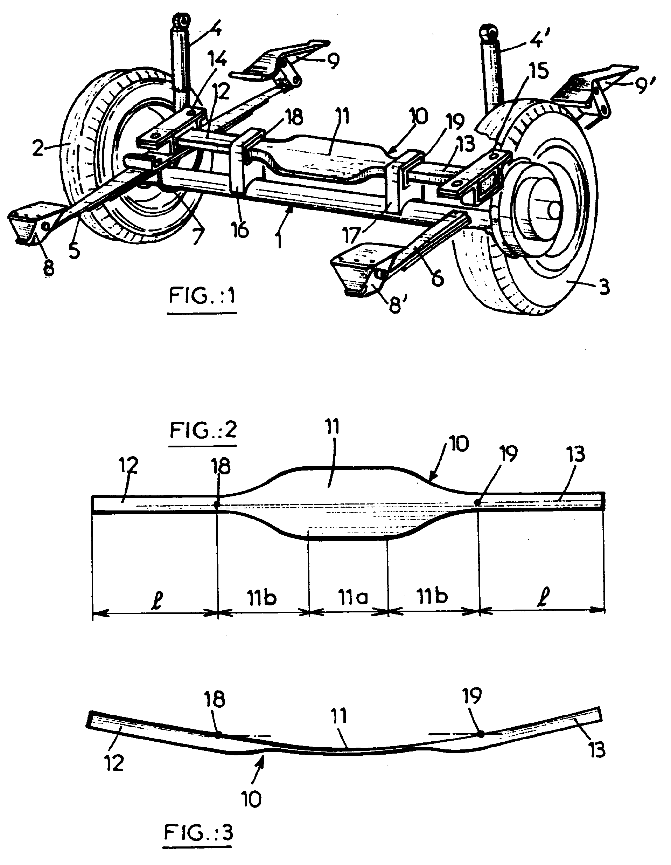

On se réfère à la figure 1 du dessin annexé où il apparaît que l'essieu 1 représenté porte des roues 2, 3 équipées de pneumatiques, cet essieu étant suspendu par ses extrémités à des moyens élastiques de suspension tels que des ressorts 5, 6 à lames parallèles. Des moyens d'assemblage classiques tels que référencés 7 assurent la liaison entre les ressorts et l'essieu. Un essieu rigide ainsi équipé correspondant à l'essieu arrière d'un châssis de camionnette, couramment utilisé par les carrossiers pour construire des camping-cars, comme on l'a vu plus haut. Des amortisseurs classiques 4, 4′ complètent la suspension de l'essieu.

Les ressorts 5, 6 sont ainsi agencés parallèlement à l'axe longitudinal du châssis et leurs extrémités sont équipées de blocs 8, 9 et 8′, 9′ respectivement assurant la liaison entre les ressorts et la caisse du véhicule. Chacun des ressorts 5, 6 peut comprendre classiquement un empilage de lames assurant une flexibilité du ressort variable avec la charge.

Un essieu ainsi suspendu convient bien pour des camionnettes supportant une charge, certes variable, mais de centre de gravité relativement bas par rapport au plancher de cette caisse et donc par rapport au sol. En particulier il supporte correctement les forces centrifuges subies par le véhicule dans les virages, sur route à fort dévers ou lors de coup de vent latéral.

Il n'en est pas de même si le châssis comportant un tel essieu arrière reçoit la caisse d'un camping-car. En effet, comme on l'a vu plus haut, le centre de gravité élevé d'une telle caisse rend celle-ci plus sensible aux forces centrifuges car le moment de ces forces (moment de renversement") est proportionnel à la distance entre le centre de gravité de la caisse et le sol. En outre la caisse volumineuse d'un camping-car rend un tel véhicule particulièrement sensible au vent latéral. Enfin le poids, relativement constant mais important d'une telle caisse, écarte le point de fonctionnement des ressorts de suspension de celui que a été choisi alors qu'on destinait un tel châssis à une camionnette.

Il résulte de toutes ces caractéristiques particulières qu'un châssis de camionnette suspendu classiquement ne donne pas satisfaction lorsqu'on l'utilise pour construire un camping-car. En particulier, un tel véhicule est alors sujet à un fort roulis. C'est le but principal de la présente invention que de réduire ce roulis de manière à le contenir dans des limites compatibles avec le confort et la sécurité nécessaires à la conduite du véhicule. C'est un autre but de la présente invention que de prévoir des moyens de rappel en roulis qui intègrent une fonction de délestage des ressorts de suspension de manière à replacer le point de fonctionnement de ceux-ci dans une région correspondant à celui pour lequel ils ont été construits.

Ces buts sont atteints, suivant l'invention, à l'aide d'une lame élastique 10 en matériau composite à fibres longitudinales, montée au-dessus de l'essieu 1, parallèlement à celui-ci, en dessous de la caisse du véhicule. La lame comprend une partie centrale souple 11, large et amincie et deux parties terminales identiques 12, 13 rigides, de section transversale sensiblement carrée et de surface constante.

Des organes de liaison 14, 15, tels que des colliers sont montés aux extrémités de la lame 10 pour relier ces extrémités à la caisse du camping-car, au niveau de longerons supportant celle-ci, par exemple. Des garnitures (non représentées) en matériau élastique tels que du caoutchouc, sont interposées entre les extrémités de la lame et les colliers 14, 15 pour autoriser une certaine rotation des parties terminales rigides 12, 13 de la lame autour des colliers.

Des supports intermédiaires 16, 17 sont fixés sur l'essieu 1 dont ils débordent verticalement et ces supports sont conformés en paliers 18, 19, respectivement, dans lesquels passe la lame 10, ces paliers définissant des points d'articulation fixes pour cette lame, à une distance prédéterminée de l'axe de l'essieu 1. Pour ce faire, des garnitures en matériau élastique, en caoutchouc par exemple, peuvent être montées dans les paliers, autour de la lame 1.

Comme représenté aux figures 2 et 3, qui se correspondent verticalement, la partie centrale 11 de la lame comprend une région 11a souple et mince, d'épaisseur et de largeur sensiblement constante, raccordée par deux régions 11b, à section de géométrie évolutive, aux deux parties 12, 13 rigides. La partie centrale amincie 11 de la lame 10 s'étend dans un plan sensiblement perpendiculaire à un plan de symétrie, normalement vertical, commun à la lame 10 et à l'essieu 1. Grâce à la souplesse de la région 11a de la partie centrale de la lame 10, celle-ci peut fléchir dans ce plan, comme on le verra plus loin.

On remarquera que les parties rigides 12, 13 se prolongent vers la partie centrale 11, par des parties de forte rigidité 12a et 13a, respectivement situées au-delà des paliers 18, 19. Ces parties 12a et 13a s'intègrent alors aux parties 12 et 13 pour constituer des leviers qui basculent sur les paliers 18, 19.

Suivant la présente invention, le rapport de la longueur 1 de la partie en porte-à-faux d'une partie terminale 12, 13 à la longueur de la zone centrale 11 est d'environ 0,5, ceci pour optimiser le rappel en roulis obtenu, comme on le verra dans la suite.

Suivant un mode de réalisation préféré de la lame 10 du dispositif selon l'invention, la lame est réalisée en un matériau composite à fibres longitudinales non coupées, noyées dans un liant.

A titre d'exemple une telle lame peut comprendre des fibres de verre noyées dans une résine synthétique telle qu'une résine époxy, la proportion en volume des fibres de verre étant de l'ordre de 50 %. Une telle lame peut être réalisée par moulage, comme celle décrite au brevet français No. 2.516.455 au nom de la demanderesse.

Une telle structure de lame permet avantageusement de faire varier la géométrie de la section transversale de la lame en épanouissant à plat les fibres de la lame dans la partie centrale, et en les rassemblant dans une section de forme compacte dans les parties terminales. La lame présente ainsi des sections transversales de surface constante et de moment d'inertie variable, nécessaires dans la présente application et avantageuses du point de vue de la simplicité de fabrication et de la tenue en fatigue de la lame.

L'épaisseur de la zone centrale 11a de la partie 11 est définie par les contraintes admissibles tandis que la largeur de cette zone est commandée par la charge du véhicule et par le débattement demandé à la partie 11, comme on le verra plus loin. La longueur 11b des zones de raccordement à profil évolutif est déterminée par des conditions technologiques de réalisation et les contraintes transversales à encaisser.

Sur la figure 3, on remarquera que la lame 10 est cintrée dans son plan vertical de flexion, suivant une caractéristique avantageuse du dispositif selon l'invention.

On rappelle que ce dispositif est destiné, notamment, à équiper des camping-cars réalisés à partir de châssis de camionnettes. Dans cette application, non limitative, on a observé que les ressorts de suspension, prévus pour supporter la caisse d'une camionnette, étaient surchargés par la caisse d'un camping-car.

En moulant la lame 10 du dispositif suivant l'invention de manière à lui donner la forme cintrée de la figure 3, dans son plan de flexion, on obtient un délestage des ressorts de suspension 5, 6 après redressement de la lame 10, sous l'effet du poids de la caisse, dans un plan horizontal de précontrainte, comme représenté à la figure 1. Pour obtenir ce résultat il faut bien sûr monter la lame sur les supports 16, 17 de manière qu'en l'absence de liaison avec la caisse, la concavité de la lame soit orientée vers le haut. L'importance du délestage peut être réglé en ajustant convenablement la raideur verticale de la lame, dont on peut calculer toutes les sections transversales, et en tenant compte aussi du débattement nécessaire à prévoir pour la lame dans sa fonction de rappel en roulis, comme on le verra plus loin.

Ainsi le point de fonctionnement des ressorts de suspension 5, 6 d'origine peut-il être ramené à celui prévu dans l'application à une camionnette. Ceci sans accroître l'encombrement du dispositif puisque, par précontrainte, la lame cintrée d'origine occupe sous charge statique moyenne une position horizontale d'encombrement minimal.

On se réfère maintenant aux figures 4 à 6 du dessin annexé pour expliquer le fonctionnement du dispositif stabilisateur selon l'invention. A la figure 4 on a représenté schématiquement la caisse 20 d'un camping-car montée sur un châssis dont l'essieu arrière est équipé de ce dispositif. Comme on l'a expliqué ci-dessus, sous charge moyenne, la lame 10 est précontrainte dans un plan sensiblement horizontal et cette précontrainte applique à la caisse, par les organes de liaison 14, 15, des efforts verticaux orientés de bas en haut qui délestent les ressorts de suspension 5, 6 pour les ramener à leur point de fonctionnement normal, point auquel ils se maintiennent grâce à la relative constance de la charge développée par la caisse d'un camping-car.

A la figure 5 on a illustré le comportement de la lame en cas d'application d'une surcharge verticale f éventuellement variable, pouvant conduire à des oscillations verticales de la caisse, phénomène couramment désigné sous le nom de "pompage". Avec une lame 10 conçue comme décrit ci-dessus, on peut ajuster la raideur verticale de la lame pour que celle-ci n'influence que modérément la raideur globale de l'ensemble constitué par les ressorts 5, 6 et la lame 10, pour ne pas modifier sensiblement le rapport de cette raideur à celle du train avant du véhicule prévue par le constructeur. L'influence de la lame 10 agit donc dans ce cas surtout pour recaler le point de fonctionnement des ressorts à un point optimal.

On notera que le cintrage symétrique renforcé de la lame 10 en cas de pompage (illustré à la figure 5) ne perturbe pas l'équilibre latéral de la caisse du véhicule. La raideur verticale de la lame doit cependant être ajustée en fonction du débattement maximal des extrémités de la lame. A cet égard il faut remarquer aussi que l'on peut agir, pour admettre ce débattement, sur la position des points d'articulation 18, 19 par rapport à l'essieu, en les écartant convenablement des bases de leurs supports 16, 17, ancrés sur cet essieu.

A la figure 6, on a illustré l'influence d'une force résultante F appliquée au centre de gravité G de la caisse, lors du passage du véhicule dans un virage ou sur une route à fort dévers, ou du fait d'un fort vent latéral. Comme on l'a vu plus haut, la position élevée du centre de gravité G amplifie le moment de cette force par rapport au sol, moment dit "de renversement", ce moment ayant pour effet de faire basculer la caisse. Couramment on observe alors des angles de caisse supérieurs à 10° qui, alternés d'un côté ou de l'autre de la caisse lors d'une circulation du véhicule dans une suite de virages par exemple, rendent la conduite de ce véhicule fatigante, inconfortable et peu sûre. Grâce au dispositif stabilisateur suivant l'invention on limite ces angles de caisse à une valeur maximale de l'ordre de 4°, par exemple, pour laquelle ils ne constituent pas une gêne ou un danger notable.

Cette limitation est obtenue grâce à un rappel en roulis développé par la lame 10 lorsque, par exemple, un côté de la caisse se soulève plus que l'autre par suite du basculement imprimé à la caisse par la force F. Si alors, comme représenté à la figure 6, l'organe de liaison 14 remonte, il fait basculer vers le bas l'autre extrémité de la partie terminale 12 de la lame. Ce basculement est transmis à son tour à l'autre partie terminale 13 de la lame, par la partie centrale souple 11 de la lame 10, de manière à rappeler vers le bas l'extrémité gauche (du point de vue de la figure 6) de la partie terminale rigide 13 qui bascule dans le sens contraire de celui des aiguilles d'une montre. L'autre extrémité de la partie 13, liée à la caisse par l'organe de liaison 15, remonte alors pour contrer l'effort d'écrasement du ressort 6 dû au roulis, ce qui a pour effet de diminuer l'importance de ce roulis.

On comprend que ce comportement est symétrique et qu'on pourrait inverser la partie droite et la partie gauche de la caisse dans la description qui précède.

Il est à noter que les ressorts 5, 6 de la suspension ont eux-mêmes un comportement antiroulis du fait de leur écrasement différentiel. Celui-ci n'est cependant pas suffisant dans le cas d'un camping-car monté à partir d'un châssis de camionnette et c'est l'objet de la lame 10 que d'ajouter sa propre raideur en roulis à celle des ressorts 5, 6 pour assister le comportement antiroulis de ceux-ci. A cet effet on peut prévoir une lame stabilisatrice présentant une forte raideur en roulis telle que l'ensemble présente une raideur en roulis de 2 à 3 fois supérieure à celle des ressorts 5, 6 seuls. Le calcul permet de déterminer les formes et les dimensions à donner à une telle lame pour atteindre ce résultat.

On a illustré sur la figure 6 une particularité avantageuse de la lame 10, tenant à la souplesse en déformation de la zone centrale 11, qui peut prendre une forme en "S" lors de la transmission d'efforts d'une partie terminale vers l'autre. Cette propagation longitudinale des efforts de rappel en roulis dans la zone centrale assure un certain déphasage entre l'effort transmis et la réaction à cet effort, déphasage qui contribue à amortir les à-coups dus aux efforts appliqués au véhicule.

Sur la figure 6 il apparaît que les parties terminales 12, 13 agissent comme de simples leviers de transmission. Seule la partie centrale souple 11 est active. Lorsqu'elle prend la configuration en S illustrée à cette figure, elle se comporte comme deux lames de ressort placées bout à bout, dont les raideurs s'ajoutent.

L'effet anti-devers obtenu dépend uniquement de la différence des hauteurs h₁ et h₂ des extrémités des parties rigides (12, 12a) et (13, 13a), au-dessus de l'essieu 1. Ainsi, pour une inclinaison donnée de la caisse, la lame ne prend qu'une seule configuration, ce qui simplifie beaucoup le calcul de celle-ci.

On remarquera aussi que le couplage rigide des extrémités de la lame aux organes de liaison 14 et 15 permet de maximiser l'amplitude de la correction anti-devers obtenue, par rapport à un couplage par bielles à deux articulations, ou par ressorts, qui introduit une atténuation de cette correction.

A titre d'exemple, on donne ci-dessous les caractéristiques mécaniques et géométriques essentielles d'un dispositif suivant l'invention, conçu pour équiper un camping-car monté sur un châssis PEUGEOT J5 équipé de ressorts de suspension de l'essieu arrière du "châssis cabine 1400" :
- longueur utile de la lame : 1300 mm
- section : 1600 mm² environ, carrée en bout, aplatie au centre
- longueur porte-à-faux parties 12,13 : 325 mm

La lame est en matériau composite à fibres de verre unidirectionnelles noyées dans une résine époxy, avec 50 à 60 % en volume de fibres, supportant une contrainte de traction supérieure à 100 hbar et présentant un module d'élasticité longitudinale de 4000 hbar.

Installé dans un tel camping-car le dispositif suivant l'invention permet de limiter le roulis de la caisse à un angle de caisse inférieur à 4°, avec un facteur de charge latérale de 0,3 g.

La réalisation de la lame 10 en matériau composite permet de réaliser un dispositif stabilisateur léger et peu encombrant. Par comparaison une réalisation en acier de la lame conduirait à une zone centrale 11 de 940 mm de largeur, d'encombrement inacceptable.

Le dispositif suivant l'invention se prête à un conditionnement en kit, comprenant sous forme de pièces détachées la lame 10, deux organes de liaison 14, 15 et deux supports 16, 17, de manière à pouvoir être installé commodément sur un camping-car existant dont on souhaite améliorer la stabilité de trajectoire du véhicule, par limitation du déversement latéral de la caisse et donc des perturbations du comportement du train roulant, notamment par braquage induit.

Bien entendu, l'invention n'est pas limitée au mode de réalisation décrit et représenté qui n'a été donné qu'à titre d'exemple. En particulier, les supports 16 et 17 pourraient être conçus de manière à basculer sur l'essieu alors que leur extrémité liée à la lame serait fixe par rapport à la partie terminale rigide adjacente.

En outre, il est clair que l'invention peut trouver application à la stabilisation de véhicules autres que les camping-cars construits à partir d'un châssis de camionnette, dans la mesure où ces autres véhicules peuvent tirer parti des fonctions de rappel en roulis et/ou de délestage de la suspension mises en oeuvre dans le dispositif suivant l'invention.

## Revendications

1. Dispositif stabilisateur en combinaison avec une caisse de véhicule comportant un essieu (1) relié à la caisse par des moyens élastiques de suspension, ce dispositif comprenant un moyen de lame (10) monté parallèlement à l'essieu et en dessous de la caisse, chacune des deux parties terminales (12, 13) de ce moyen de lame (10) étant articulée d'une part sur la caisse au niveau de l'extrémité de cette partie terminale grâce à un organe de liaison (14, 15) et, d'autre part, sur l'essieu (1) par un point d'articulation (18, 19) situé en avant du raccordement de la partie terminale à une partie centrale du moyen de lame, de manière à constituer un levier pour assurer un rappel en roulis de cette caisse par un contre-basculement de l'autre partie terminale du moyen de lame, caractérisé en ce que le moyen de lame est monté au-dessus de l'essieu (1) et formé d'une seule lame (10) constituée en matériau composite à fibres longitudinales continues de bout en bout, la partie centrale (11) de la lame étant élastiquement plus déformable dans un plan de symétrie commun à la lame (10) et à l'essieu que les deux parties terminales (12, 13) ayant une rigidité constante, chaque partie terminale de rigidité constante constituant un levier qui bascule dans ledit plan de symétrie commun à la lame (10) et à l'essieu (1).

2. Dispositif conforme à la revendication 1, caractérisé en ce que la lame (10) constituée de fibres continues présente une section transversale de surface constante et de géométrie variable, la partie centrale souple (11) étant amincie et élargie par rapport aux parties terminales rigides (12, 13), le plan de la partie amincie étant perpendiculaire à un plan de symétrie commun à la lame et à l'essieu.

3. Dispositif conforme à l'une quelconque des revendications 1 et 2, caractérisé en ce que chaque partie terminale (12, 13) se prolonge en porte-à-faux à partir du point d'articulation adjacent (18, 19) sur une longueur environ égale à la moitié de celle de la partie centrale souple (11) mesurée entre les deux points d'articulation (18, 19).

4. Dispositif conforme à l'une quelconque des revendications 1 à 3, caractérisé en ce que, en l'absence de charge, la lame est cintrée suivant son axe longitudinal de manière à être précontrainte sous charge pour délester partiellement les moyens élastiques de suspension.

5. Dispositif conforme à l'une quelconque des revendications 1 à 4, caractérisé en ce que la lame est constituée d'environ 50 % en volume de fibres continues de bout à bout, noyées dans une résine synthétique.

6. Dispositif conforme à l'une quelconque des revendications 1 à 5, caractérisé en ce que la raideur de la lame est telle que la raideur en roulis de l'ensemble constitué par les moyens élastiques de suspension et la lame connectée aux organes de liaison et aux moyens d'articulation, est de 2 à 3 fois supérieure à celle des moyens élastiques de suspension seuls.

7. Dispositif conforme à l'une quelconque des revendications précédentes, caractérisé en ce que les organes de liaison (14, 15) définissent chacun un point d'articulation d'une extrémité de la lame sur la caisse du véhicule.

8. Dispositif conforme à la revendication 7, caractérisé en ce que chaque organe de liaison (14, 15) comprend une garniture en un matériau élastique passée sur l'extrémité de la lame pour autoriser une rotation de la partie terminale de la lame ancrée dans cet organe autour du point d'articulation.

9. Dispositif conforme à l'une quelconque des revendications précédentes, caractérisé en ce que deux supports intermédiaires (16, 17) sont ancrés sur l'essieu et comprennent chacun, à une distance de l'essieu au moins égale au débattement maximal de la lame, un palier dans lequel passe la lame et qui définit pour celle-ci un point d'articulation fixe (18, 19).

10. Dispositif conforme à la revendication 9, caractérisé en ce que le palier comprend une garniture en un matériau élastique qui enveloppe la lame au niveau du point d'articulation.

11. Véhicule automobile équipé d'un dispositif stabilisateur, en combinaison avec une caisse de véhicule, conforme à l'une quelconque des revendications 1 à 10.

12. Véhicule conforme à la revendication 11, de type auto-caravane, caractérisé en ce que ledit essieu est l'essieu arrière.

13. Ensemble du type "kit" pour le montage du dispositif comprenant toutes les caractéristiques de l'une quelconque des revendications 1 à 10 sur un véhicule existant, caractérisé en ce qu'il comprend, en pièces détachées, une lame (10) constituée en matériau composite à fibres longitudinales continues de bout en bout et présentant une partie centrale (11) élastiquement plus déformable que ses deux parties terminales (12, 13) de rigidité constante, deux organes de liaison (14, 15) pour définir chacun un point d'articulation d'une extrémité de la lame sur la caisse du véhicule et deux supports intermédiaires (16, 17) destinés à être ancrés sur un essieu du véhicule et comprenant chacun, à une distance de l'essieu au moins égale au débattement maximal de la lame, un palier pour la lame et définissant un point d'articulation (18, 19) pour celle-ci.

## Patentansprüche

1. Stabilisatoreinrichtung in Verbindung mit einem Fahrzeug-Kastenaufbau, der eine Achse (1) zulässt, die mit dem Kastenaufbau durch elastische Aufhängungsmittel verbunden ist, wobei diese Einrichtung ein Federblattmittel (10) aufweist, das parallel zur Achse und unterhalb des Kastenaufbaues angebracht ist, wobei jeder der beiden Endabschnitte (12,13) dieses Federblattmittels (10) einerseits am Kastenaufbau im Bereich des Endes dieses Endabschnitts mittels eines Verbindungsteils (14,15) und andererseits an der Achse (1) durch einen Gelenkpunkt (18,19) angelenkt ist, der sich vor dem Übergang des Endabschnitts in den zentralen Abschnitt des Federblattmittels befindet, so daß ein Hebel gebildet wird, um eine Rollstabilisierung dieses Kastenaufbaues durch eine Gegenschwenkbewegung des anderen Endabschnitts des Federblattmittels auszuführen, dadurch gekennzeichnet, daß das Federblattmittel über der Achse (1) angebracht ist und von einem einzigen Federblatt (10) gebildet wird, das aus einem zusammengesetzten Material mit durchgehenden längsverlaufenden Fasern besteht, wobei der zentrale Abschnitt (11) des Federblattes in einer dem Federblatt (10) und der Achse gemeinsamen Symmetrieebene stärker elastisch verformbar als die beiden Endabschnitte (12,13) ist, die eine konstante Steifigkeit haben, wobei jeder Endabschnitt konstanter Steifigkeit einen Hebel bildet, der in der dem Federblatt (10) und der Achse (1) gemeinsamen Symmetrieebene verschwenkt.

2. Einrichtung nach Anspruch 1, dadurch gekennzeichnet, daß das Federblatt (10), das aus durchgehenden Fasern besteht, einen Querschnitt konstanter Fläche und veränderlicher Geometrie hat, wobei der weiche zentrale Abschnitt (11) gegenüber den starren Endabschnitten (12,13) verdünnt und verbreitert ist, wobei die Ebene des verdünnten Abschnitts senkrecht zu der dem Federblatt und der Achse gemeinsamen Symmetrieebene verläuft.

3. Einrichtung nach einem der Ansprüche 1 und 2, dadurch gekennzeichnet, daß jeder Endabschnitt (12,13) ausgehend von dem benachbarten Gelenkpunkt (18,19) eine Auskraglänge hat, die ungefähr gleich der halben Länge des weichen zentralen Abschnitts (11), gemessen zwischen den beiden Gelenkpunkten (18,19), ist.

4. Einrichtung nach einem der Ansprüche 1 bis 3, dadurch gekennzeichnet, daß das Federblatt bei fehlender Last entlang seiner Längsachse so gekrümmt ist, daß es unter Last vorgespannt ist, um die elastischen Aufhängungsmittel teilweise zu entlasten.

5. Einrichtung nach einem der Ansprüche 1 bis 4, dadurch gekennzeichnet, daß das Federblatt aus ungefähr 50 Vol.-% durchgehenden Fasern besteht, die in ein Kunstharz eingebettet sind.

6. Einrichtung nach einem der Ansprüche 1 bis 5, dadurch gekennzeichnet, daß die Steifigkeit des Federblatts derart ist, daß der Widerstand gegen eine Rollbewegung der Anordnung, der von den elastischen Aufhängungsmitteln und dem mit den Verbindungsorganen und den Gelenkmitteln verbundenen Federblatt gebildet wird, zwei- bis dreimal so groß wie die der elastischen Aufhängungsmitteln allein ist.

7. Einrichtung nach einem der vorhergehenden Ansprüche, dadurch gekennzeichnet, daß die Verbindungsorgane (14,15) jeweils einen Gelenkpunkt zwischen einem Ende des Federblatts und dem Fahrzeug-Kastenaufbau bilden.

8. Einrichtung nach Anspruch 7, dadurch gekennzeichnet, daß jedes Verbindungsorgan (14,15) einen Belag aus einem elastischen Material aufweist, der auf dem Ende des Federblatts aufgestellt ist, um eine Drehbewegung des Endabschnitts des in diesem Organ verankerten Federblatts um den Gelenkpunkt zu ermöglichen.

9. Einrichtung nach einem der vorhergehenden Ansprüche, dadurch gekennzeichnet, daß zwei Zwischenstützen (16,17) auf der Achse verankert sind und jeweils - in einem Abstand von der Achse, der mindestens gleich der maximalen Auslenkung des Federblatts ist - ein Lager aufweisen, durch das das Federblatt verläuft und das für dieses einen ortsfesten Gelenkpunkt (18,19) bildet.

10. Einrichtung nach Anspruch 9, dadurch gekennzeichnet, daß das Lager einen Belag aus einem elastischen Material aufweist, das das Federblatt im Bereich des Gelenkpunktes umgibt.

11. Kraftfahrzeug, das mit einer Stabilisatoreinrichtung in Verbindung mit einem Fahrzeug-Kastenaufbau gemäß einem der Ansprüche 1 bis 10 ausgerüstet ist.

12. Fahrzeug nach Anspruch 11 in Form eines Wohnwagens, dadurch gekennzeichnet, daß die Achse die Hinterradachse ist.

13. Teilesatz für den Einbau der Einrichtung mit sämtlichen Merkmalen irgendeines der Ansprüche 1 bis 10 in ein vorhandenes Fahrzeug, dadurch gekennzeichnet, daß es - in Form einzelner Teile - aufweist: ein Federblatt (10), das aus einem zusammengesetzten Material aus längsverlaufenden durchgehenden Fasern besteht und einen zentralen Abschnitt (11) aufweist, der stärker elastisch verformbar als seine beiden Endabschnitte (12,13) konstanter Steifigkeit ist, zwei Verbindungsorgane (14,15), die jeweils einen Gelenkpunkt zwischen einem Ende des Federblattes und dem Fahrzeug-Kastenaufbau bilden, und zwei Zwischenstützen (16,17), die an einer Achse des Fahrzeugs verankerbar sind und jeweils - in einem Abstand zur Achse, der mindestens gleich der maximalen Auslenkung des Federblatts ist - ein Lager für das Federblatt aufweisen, das für dieses einen Gelenkpunkt (18,19) bildet.

## Claims

1. Stabilising device combined with a vehicle body comprising an axle (1) connected to the body by elastic suspension means, this device comprising a leaf means (10) mounted parallel to the axle and below the body, each of the two end parts (12, 13) of this leaf means (10) being articulated on the one hand to the body in the region of the end of this end part by virtue of a linking member (14, 15) and, on the other hand, to the axle (1) by an articulation point (18, 19) situated in front of the connection of the end part to a central part of the leaf means, so as to constitute a lever to ensure a return of this body in roll by a counter-tipping of the other end part of the leaf means, characterised in that the leaf means is mounted above the axle (1) and is formed from a single leaf (10) cade up of composite material with longitudinal fibres which are continuous from end to end, the central part (11) of the leaf being elastically more deformable, in a plane of symmetry common to the leaf (10) and to the axle, than the two end parts (12, 13) having constant rigidity, each end part of constant rigidity constituting a lever which tips in the said plane of symmetry common to the leaf (10) and to the axle (1).

2. Device in accordance with Claim 1, characterised in that the leaf (10) made up of continuous fibres has a transverse section of constant surface-area and of variable geometry, the flexible central part (11) being thinned and widened relative to the rigid end parts (12, 13), the plane of the thinned part being perpendicular to a plane of symmetry common to the leaf and to the axle.

3. Device in accordance with any one of Claims 1 and 2, characterised in that each end part (12, 13) is extended to overhang from the adjacent articulation point (18, 19) over a length approximately equal to half that of the flexible central part (11) measured between the two articulation points (18, 19).

4. Device in accordance with any one of Claims 1 to 3, characterised in that, in the absence of load, the leaf is curved along its longitudinal axis so as to be prestressed under load so as to partially unload the elastic suspension means.

5. Device in accordance with any one of Claims 1 to 4, characterised in that the leaf is made up of approximately 50% by volume of fibres which are continuous from end to end, embedded in a synthetic resin.

6. Device in accordance with any one of Claims 1 to 5, characterised in that the stiffness of the leaf is such that the stiffness in roll of the assembly consisting of the elastic suspension means and the leaf connected to the linking members and to the articulation means is 2 to 3 times greater than that of the elastic suspension means alone.

7. Device in accordance with any one of the preceding claims, characterised in that the linking members (14, 15) each define an articulation point for one end of the leaf on the body of the vehicle.

8. Device in accordance with Claim 7, characterised in that each linking member (14, 15) comprises packing made from an elastic material passed over the end of the leaf so as to allow a rotation of the end part of the leaf anchored in this member about the articulation point.

9. Device in accordance with any one of the preceding claims, characterised in that two intermediate supports (16, 17) are anchored to the axle and each comprise, at a distance from the axle at least equal to the maximum deflection of the leaf, a bearing into which the leaf passes and which defines for the latter a fixed articulation point (18, 19).

10. Device in accordance with Claim 9, characterised in that the bearing comprises a packing cade from an elastic material which envelops the leaf in the region of the articulation point.

11. Motor vehicle equipped with a stabilising device combined with a vehicle body in accordance with any one of Claims 1 to 10.

12. Vehicle in accordance with Claim 11, of the camping-car type, characterised in that the said axle is the rear axle.

13. Assembly of the "kit" type for mounting the device comprising all the characteristics of any one of Claims 1 to 10 on an existing vehicle, characterised in that it comprises, as separate components, a leaf (10) made up of composite material with longitudinal fibres which are continuous from end to end and having a central part (11) which is elastically more deformable than its two end parts (12, 13) of constant rigidity, two linking members (14, 15) for each defining an articulation point of one end of the leaf on the body of the vehicle and two intermediate supports (16, 17) intended to be anchored to an axle of the vehicle and each comprising, at a distance from the axle which is at least equal to the maximum deflection of the leaf, a bearing for the leaf and defining an articulation point (18, 19) for the latter.
